## Europäisches Patentamt
## European Patent Office
## Office européen des brevets

(11) Veröffentlichungsnummer: **0 190 761**
**B 1**

(12) **EUROPÄISCHE PATENTSCHRIFT**

(45) Veröffentlichungstag der Patentschrift: 09.05.90

(21) Anmeldenummer: 86101558.4

(22) Anmeldetag: 06.02.86

(51) Int. Cl.⁵: **B 29 C 67/22**, B 29 C 59/04, B 29 D 9/00, B 32 B 5/20 // B29K105:04

(54) Verfahren zur Herstellung einer geprägten, tiefziehfähigen Schaumverbundfolie.

(30) Priorität: 08.02.85 DE 3504307

(43) Veröffentlichungstag der Anmeldung:
13.08.86 Patentblatt 86/33

(45) Bekanntmachung des Hinweises auf die Patenterteilung:
09.05.90 Patentblatt 90/19

(84) Benannte Vertragsstaaten:
AT BE CH FR GB IT LI LU NL SE

(56) Entgegenhaltungen:
DE-A-2 622 574
DE-A-2 808 733
DE-A-2 908 596
DE-B-2 840 581

(73) Patentinhaber: Pegulan-Werke AG
Foltzring 35
D-6710 Frankenthal/Pfalz (DE)

(72) Erfinder: Gruss, Gerolf, Dipl.-Ing.
Karolinenstrasse 54
D-6730 Neustadt/Weinstrasse (DE)
Erfinder: Kooy, Theodorus, Chem.Ing.
Kleiststrasse 18
D-6711 Hessheim (DE)

(74) Vertreter: Grussdorf, Jürgen, Dr. et al
Patentanwälte Zellentin & Partner
Rubensstrasse 30
D-6700 Ludwigshafen (DE)

Courier Press, Leamington Spa, England.

**Beschreibung**

Die Erfindung betrifft ein Verfahren zur Herstellung einer geprägten, tiefziehfähigen Schaumverbundfolie, die insbesondere zur Thermokaschierung geeignet ist, bestehend aus einer kompakten Deckschicht aus thermoplastischem Kunststoff und einer unterseitigen geschäumten Kunststoffschicht, wobei eine geformte Deckschicht auf ein treibmittelhaltiges Plastisol, das sich auf einer Trägerschicht befindet, aufgebracht wird, anschließend das Schichtgebilde erwärmt und das Plastisol angeliert und aufgeschäumt wird, und nach der Abkühlung die erhaltene Schaumverbundfolie von der Trägerschicht abgezogen und aufgewickelt wird.

Derartige geprägte, tiefziehfähige, in ihrem Griff und Aussehen lederartigen Schichtmaterialien aus verschiedenen Kunststoffen besitzen ein großes Anwendungsgebiet und sind von erheblicher technischer Bedeutung. Vor allem deswegen, weil sie neben den technisch wertvollen Eigenschaften der Kunststoff, z. B. große Festigkeit, Alterungsbeständigkeit, Abriebfestigkeit usw. das Aussehen von Leder besitzen. Deshalb finden sie eine große Verwendung als Kunstleder, vor allem als Verkleidungsmaterial, z. B. bei der Automobilinnenverkleidung, in der Täschnerindustrie oder als Basismaterial für Koffer, Taschen usw. jeglicher Art. Insbesondere sind dabei die Anwendungsgebiete bevorzugt, bei denen eine derartige Verbundfolie auf ein Basismaterial thermokaschiert werden soll. Obwohl diese Technologie der Thermokaschierung seit einigen Jahren in der Praxis Eingang gefunden hat, ist bisher kein Produkt bekannt, das diesen Anforderungen hinreichend genügt. Besonders wichtig ist dabei, daß die Narbstandfestigkeit der geprägten Deckschicht bei der Thermokaschierung erhalten bleibt, d. h. bei Erwärmung der Schaumverbundfolie auf 130—180°C die Narbung der Deckfolie nicht Schaumverbundfolie bis 400%.

Die Herstellung von Verkleidungsmaterial, bestehend aus einer Deckschicht und einer Schaumstoffschicht ist bereits bekannt. So wird in der DE—AS 12 58 072 ein gattungsgemäßes Verfahren zum Herstellen von dünnen Schaumstoffschichten aus fließfähigen Kunststoffmischungen auf Polyurethan- oder Polyvinylchloridbasis beschrieben. Dabei wird das Gemisch zuerst auf eine zum Verschäumen unzureichende Temperatur gekühlt und dann mit dieser Temperatur auf eine Trägerfolie aufgebracht und nach dem Abdecken mit einer Deckfolie bis mindestens auf die Verschäumtemperatur erwärmt. Die Gießunterlage kann dann abgezogen werden, so daß dann Schaumstoffschichten mit einer aus der Deckfolie gebildeten Oberfläche entstehen. Soweit dabei geprägte Deckfolien verwendet werden, ist vorgesehen, daß solche mit höherer Wärmestandsfähigkeit verwendet werden, soweit höhere Temperaturen für die Schaumbildung erforderlich sind.

In der DE—AS 17 04 433 wird ein tiefziehfähiges Verkleidungsmaterial mit lederartiger Oberfläche angegeben, bestehend aus einer Schaumstoffschicht, die aus einem Weich-PVC-Schaumstoff besteht, wobei die Abdeckschicht auf einer Seite eine präg- und/oder bedruckbare PVC-Schicht ist und Prägungen aufweist, wobei die Prägungen vor der Vereinigung der Schichten hergestellt sind. Über die Prägung der Abdeckschicht wird dabei jedoch keine Aussage gemacht. Auch findet sich kein Hinweis darauf, ob das dortige Verkleidungsmaterial für eine Thermokaschierung verwendbar ist. Da auch nur "gegebenenfalls" ein Haftvermittler verwendet werden soll, ist nicht ersichtlich, wie die Schichten zusammengehalten werden sollen.

Weiterhin ist aus dem DE—GM 18 76 879 eine Innenverkleidung für Fahrzeuge bekannt, die aus einer ein- oder mehrschichtig warm verformbaren Kunststoffolie aus einem wärme- und prägungsbeständigen thermoplastischen Material besteht. Dabei werden für die Oberflächenschicht solche Thermoplasten ausgewählt, bei denen eine Prägung auch nach dem Vorformungsvorgang bestehen bleibt. Aber auch in dieser Literaturstelle finden sich keine näheren Angaben über den Prägevorgang der Deckschicht und die Narbenstandfestigkeit des Schichtmaterials bei einer Thermokaschierung.

Der Erfindung liegt daher nun die Aufgabe zugrunde, ein Verfahren zur Herstellung einer Verbundfolie der eingangs genannten Art zu schaffen, die den hohen Anforderungen an ein solches Material bei einer Thermokaschierung genügt, jedoch Deckschichten mit geringerer Wärmestandsfestigkeit aufweist.

Erfindungsgemäß wird ein Verfahren zur Herstellung einer geprägten tiefziehfähigen Schaumverbundfolie vorgeschlagen, bestehend aus einer kompakten Deckschicht aus thermoplastischem Kunststoff und einer unterseitigen geschäumten Kunststoffschicht, wobei eine geformte Deckschicht auf ein treibmittelhaltiges Plastisol, das sich auf einer Trägerschicht befindet, aufgebracht wird, anschließend das Schichtgebilde erwärmt und dabei das Plastisol zuerst bei einer Temperatur von 140 bis 160°C angeliert und dann bei einer Temperatur von 190 bis 220°C aufgeschäumt wird, und das Plastisol dabei die Rückseitenabzeichnung der Prägestruktur vollständig ausfüllt und nach erfolgter Abkühlung die erhaltene Schaumverbundfolie von der Trägerschicht abgezogen und aufgewickelt wird, wobei die Deckfolie mit einer Dicke von 0,1—1 mm vor dem Aufbringen auf das Plastisol bei einer Massentemperatur zwischen 140 bis 220°C geprägt und danach abgekühlt wird und nach dem Andrücken der abgekühlten, geprägten Deckschicht auf das Plastisol das Angelieren des Plastisols und das Schäumen erfolgen.

Bei dieser erfindungsgemäßem Verfahrensweise hat sich nun überraschenderweise ergeben, daß bei der erhaltenen Schaumverbundfolie die Narbstandfestigkeit auch bei den Temperaturen, wie sie bei einer späteren Thermokaschierung einer solchen Schaumverbundfolie auf ein Basismaterial auftreten, erhalten bleibt, da die Rückseitenabzeichnung der Prägestruktur der Deckschicht vollständig ausgefüllt und damit fixiert wird.

Als vorteilhaft hat sich dabei herausgestellt, die geprägte, abgekühlte Deckschicht vor dem Aufdrücken auf das Plastisol über eine Temperwalze zu führen und wieder zu erwärmen, wodurch die Deckschicht egalisiert wird.

Die Deckschicht kann dabei vor dem Prägevorgang bedruckt und/oder lackiert werden.

Um zu verhindern, daß bei den hohen Temperaturen, die bei dem Prägevorgang notwendig sind, die Deckfolie auf die Prägewalze festklebt, kann dabei die Oberfläche der Prägewalze in vorteilhafter Weise vor dem Prägevorgang mit einem vernetzbaren Silikon behandelt werden.

Das Auflegen der Deckschicht auf die Oberseite des Plastisols erfolgt dabei zweckmäßigerweise mittels einer Andruckwalze, die einen Durchmesser von nur 50—100 mm aufweist, wodurch sich entsprechend nur eine kleine Andrucksfläche ergibt.

Als Deckschicht wird zweckmäßigerweise eine PVC-Folie eingesetzt, die eine Dicke von 0,1 bis 1,0 mm besitzt. Es kann aber auch eine Mehrschichtenfolie mit einer Dicke von 0,1—1,0 mm eingesetzt werden.

Die Deckschicht kann aus Weich-Polyvinylchlorid bestehen, die kann aber auch aus einer Mischung von Polyvinylchlorid und/oder Acryl-Butadien-Styrol (ABS) und/oder Styrol-Acrylnitril-Copolymere (SAN) und/oder Äthylen-Vinylacetat (EVA) und/oder Nitrilkautschuk (NBR) und/oder Äthylen-Propylen-Terpolymerisat (EPDM) und/oder chloriertem Polyäthylen (CPE) und/oder einen Zusatz an Monomerweichmacher bestehen.

Für die unterseitige geschäumte Kunststoffschicht wird vorzugsweise PVC-Plastisol eingesetzt, wobei dem PVC-Plastisol vernetzende Weichmacher zugesetzt sein können.

Sofern die Deckschicht vor dem Prägevorgang nicht lackiert wurde, ist es auch möglich, die fertige geprägte Verbundfolie zu lackieren.

Die Erfindung soll im folgenden anhand eines Anführungsbeispiels noch erläutert werden: An einem 4-Walzenkalander wird eine 0,35 mm Dicke Polyblendfolie kalandriert. Diese Folie weist folgende Zusammensetzung auf:

30 Gewichtsteile PVC
30 Gewichtsteile ABS
20 Gewichtsteile NBR
10 Gewichtsteile SAN
10 Gewichtsteile Monomerweichmacher Zuzüglich können auch noch Stabilisatoren, Pigmente, Schwerentflammbarkeitsmittel und/oder UV-Absorber enthalten sein.

Die erhaltene Folie wird anschließend separat in einer Anlage bedruckt und lackiert bzw. nur lackiert und danach anschließend in einer Prägeanlage mit der gewünschten Prägung versehen. Dazu wird die Deckfolie auf eine Temperatur von 170°C vorgewärmt und bei einer Temperatur der Prägewalze von 190°C geprägt.

Die Oberfläche der Prägewalze ist dabei mit einer vernetzten Silikonschicht versehen, wodurch ein Ankleben der Folie auf die Prägewalze verhindert wird.

Die geprägte Folie wird dann auf das flüssige Plastisol, das mittels einer Rakel oder eines Rollcoaters auf ein Release-Papier vorgelegt ist, angedrückt. Der Einlaufwinkel der Folie auf das Plastisol ist dabei etwa 50° zur Oberfläche des Plastisols. Anschließend wird das Plastisol, das ein Treibmittel enthält, bei ungefähr 200—220°C aufgeschäumt und die auf dem Release-Papier vorhandene Verbundfolie gekühlt. Darauf wird die erhaltene Schaumverbundfolie von dem Trägerpapier getrennt und die Schaumverbundfolie aufgewickelt.

Die Auftragsmenge des Plastisols auf das Trägermaterial beträgt dabei 600 gr/m², wodurch eine Enddichte des Schaums von 0,4 kg/l erreicht wird. Die Fertigungsgeschwindigkeit der Trägerschicht mit dem Plastisol liegt dabei ungefähr zwischen 6 und 8 m/min. Als Plastisol wird eine Mischung eingesetzt, die besteht aus:

125 Teilen PVC
60 Teilen DOP (Dioctylphthalat)
20 Teilen BBP (Butylbenzylphathalat)
3,5 Teilen Azodicarbonamid
1,1 Teilen Ba/Cd-Stabilisator

Die Viskosität des Plastisols beträgt 240 Poise, gemessen bei 25°C mit einem Brockfield Viskosimeter (Modell HAT mit Spindel Nr. 6 bei 20 U/min.).

Die mit der Erfindung erzielten Vorteile bestehen insbesondere darin, daß eine tiefgeprägte, tiefziehfähige Schaumverbundfolie hergestellt werden kann, die sich weich und lederähnlich anfühlt und auch lederählich aussieht. Diese Verbundfolie ist insbesondere für eine Thermokaschierung geeignet, wobei bei der Thermokaschierung die Narbstandfestigkeit der Deckschicht der Schaumverbundfolie erhalten bleiben.

**Patentansprüche**

1. Verfahren zur Herstellung einer geprägten tiefziehfähigen Schaumverbundfolie, bestehend aus einer kompakten Deckschicht aus thermoplastischem Kunststoff und einer unterseitigen geschäumten Kunststoffschicht, wobei eine geformte Deckschicht auf ein treibmittelhaltiges Plastisol, das sich auf einer Trägerschicht befindet, aufgebracht wird, anschließend das Schichtgebilde erwärmt und dabei das Plastisol zuerst bei einer Temperatur von 140 bis 160°C angeliert und dann bei einer Temperatur von 190 bis 220°C aufgeschäumt wird, und das Plastisol dabei die Rückseitenabzeichnung der Prägestruktur vollständig ausfüllt und nach erfolgter Abkühlung die erhaltene Schaumverbundfolie von der Trägerschicht abgezogen und aufgewickelt wird, dadurch gekennzeichnet, daß die Deckfolie mit einer Dicke von 0,1—1 mm vor dem Aufbringen auf das Plastisol bei einer Massentemperatur zwischen 140 bis 220°C geprägt und danach abgekühlt wird und nach dem Andrücken der abgekühlten, geprägten Deckschicht auf das Plastisol das Angelieren des Plastisols und das Schäumen erfolgen.

2. Verfahren nach Anspruch 1, dadurch gekennzeichnet, daß die abgekühlte geprägte Deckschicht vor dem Aufdrücken auf das Plastisol über eine Temperwalze geführt, dabei aufgewärmt und dadurch egalisiert wird.

3. Verfahren nach Anspruch 1 oder 2, dadurch gekennzeichnet, daß die Deckschicht vor dem Prägevorgang bedruckt und/oder lackiert wird.

4. Verfahren nach einem oder mehreren der vorhergehenden Ansprüche, dadurch gekennzeichnet, daß die Prägung der Deckschicht mit einer Prägewalze vorgenommen wird, deren Oberfläche mit einer vernetzten Silikonschicht versehen ist.

5. Verfahren nach einem oder mehreren der vorhergehenden Ansprüche, dadurch gekennzeichnet, daß als Deckschicht eine PVC-Folie eingesetzt wird.

6. Verfahren nach einem oder mehreren der vorhergehenden Ansprüche, dadurch gekennzeichnet, daß als Deckschicht eine Mehrschichtenfolie eingesetzt wird.

7. Verfahren nach einem oder mehreren der vorhergehenden Ansprüche, dadurch gekennzeichnet, daß eine Deckschicht verwendet wird, die neben Polyvinylchlorid noch Acryl-Butadien-Styrol (ABS) und/oder Styrol-Acrylnitril-Copolymere (SAN) und/oder Äthylen-Vinylacetat-Copolymere (EVAC) und/oder Nitrilkautschuk (NBR) und/oder Äthylen-Propylen-Terpolymerisate (EPDM) und/oder chlorierter Polyäthylen (CPE) enthält.

8. Verfahren nach einem oder mehreren der vorhergehenden Ansprüche, dadurch gekennzeichnet, daß für die unterseitige geschäumte Kunststoffschicht ein PVC-Plastisol eingesetzt wird.

9. Verfahren nach einem oder mehreren der vorhergehenden Ansprüche, dadurch gekennzeichnet, daß die geprägte, tiefziehfähige Schaumverbundfolie lackiert wird.

**Revendications**

1. Procédé de fabrication d'une feuille composite en mousse emboutissable, gaufrée, comportant une couche de couverture compacte en matière synthétique thermoplastique et une couche inférieure de matière synthétique moussée, par application d'une couche de couverture façonnée sur un plastisol, qui contient un agent moussant et qui se trouve sur une couche de support, le produit en couches étant ensuite chauffé, le plastisol étant tout d'abord gélifié à une température de 140 à 160°C et ensuite moussé à une température de 190 à 220°C, le pastisol remplissant alors le dessin de l'envers de la structure gaufrée et, après le refroidissement, la feuille composite en mousse obtenue étant enlevée de la couche de support et enroulée, procédé caractérisé en ce que la couche de couverture d'une épaisseur de 0,1—1 mm est, avant son application sur le pastisol, gaufrée à une température de masse comprise entre 140 et 220°C et ensuite refroidie et en ce qu'après l'application par pression de la couche de couverture guafrée refroidie sur le plastisol, la gélification du plastisol et le moussage ont lieu.

2. Procédé selon la revendication 1, caractérisé en ce que la couche de couverture gaufrée refroidie est, avant son application par pression sur le plastisol, amenée à passer sur un rouleau de recuit, y est chauffée et est ainsi égalisée.

3. Procédé selon la revendication 1 ou 2, caractérisé en ce que la couche de couverture est, avant l'opération de gaufrage, imprimée et/ou laquée.

4. Procédé selon l'une ou plusieurs des revendications précédentes, caractérisé en ce que le gaufrage de la couche de couverture est effectué avec un rouleau de gaufrage, dont la surface est pourvue d'une couche de silicone réticulé.

5. Procédé selon l'une ou plusieurs des revendications précédentes, caractérisé en ce que, comme couche de couverture, une feuille de PVC est mise en oeuvre.

6. Procédé selon l'une ou plusieurs des revendications précédentes, caractérisé en ce que, comme couche de couverture, il est mis en oeuvre une feuille à plusieurs couches.

7. Procédé selon l'une ou plusieurs des revendications précédentes, caractérisé en ce qu'on utilise une couche de couverture qui, en plus du polychlorure de vinyle, contient encore du styrène-acrylo-butadiène (ABS) et/ou des copolymères de styrène-acrylonitrile (SAN), et/ou des copolymères d'éthylène-acétate de vinyle (EVAC) et/ou du caoutchouc nitrile (NBR) et/ou des terpolymères d'éthylène-propylène (EPDM) et/ou du polyéthylène chloré (CPE).

8. Procédé selon l'une ou plusieurs des revendications précédentes, caractérisé en ce que, pour la couche inférieure de matière synthétique moussée, on met en oeuvre un plastisol de PVC.

9. Procédé selon l'une ou plusieurs des revendications précédentes, caractérisé en ce que la feuille composite en mousse emboutissable, gaufrée, est laquée.

**Claims**

1. Process for the production of an embossed deep-drawable foamed composite film, consisting of a compact covering layer of thermoplastic synthetic material and a lower-sided foamed synthetic material layer, whereby a formed covering layer is applied to a foaming agent-containing plastisol, which is present on a carrier layer, subsequently the lamellar body is warmed and the plastisol thereby first gelled on at a temperature of 140 to 160°C and then foamed at a temperature of 190 to 220°C and the plastisol thereby completely fills up the rear side marking of the embossed structure and, after cooling has taken place, the foamed composite film is stripped off from the carrier layer and rolled up, characterised in that the covering film with a thickness of 0.1—1 mm is embossed, before the application of the plastisol, at a bulk temperature between 140 to 220°C and thereafter cooled, and, after the pressing on of the cooled, embossed covering layer on to the plastisol, the gelling on of the plastisol and the foaming take place.

2. Process according to claim 1, characterised in that the cooled, embossed covering layer, before the pressing on of the plastisol, is passed over a tempering roller, thereby warmed and thereby levelled.

3. Process according to claim 1 or 2, characterised in that the covering layer is imprinted and/or lacquered before the embossing procedure.

4. Process according to one or more of the preceding claims, characterised in that the embossing of the covering layer is carried out with an embossing roller, the surface of which is provided with a cross-linked silicone layer.

5. Process according to one or more of the preceding claims, characterised in that a PVC film is used as covering layer.

6. Process according to one or more of the preceding claims, characterised in that a multilayer film is used as covering layer.

7. Process according to one or more of the preceding claims, characterised in that a covering layer is used which, besides polyvinyl chloride, also contains acrylic-butadiene-styrene (ABS) and/or styrene-acrylonitrile copolymers (SAN) and/or ethylene-vinyl acetate co-polymers EVAC) and/or nitrile rubber (NBR) and/or ethylene-propylene terpolymers (EPDM) and/or chlorinated polyethylene (CPE).

8. Process according to one or more of the preceding claims, characterised in that a PVC plastisol is used for the underside foamed synthetic material layer.

9. Process according to one or more of the preceding claims, characterised in that the embossed deep-drawable foamed composite film is lacquered.